# EUROPEAN PATENT APPLICATION

(11) **EP 4 567 504 A1**
(43) Date of publication of application: **11.06.2025**
(21) Application number: 23214487.3
(22) Date of filing: 06.12.2023
(51) Int. Cl.: G02F 1/03, G02F 1/00, G02F 1/05

(54) **A LOW LOSS ELECTRO-OPTICAL MODULATOR**

(71) Applicant: Imec VZW, 3001 Leuven (BE)
(72) Inventor: Soussan, Philippe, 1300 Wavre (BE); Seema Saseendran, Sandeep, 3012 Wilsele (BE); Brouckaert, Joost, 8500 Kortrijk (BE); Sharif Azadeh, Mohammad Saeed, 3001 Leuven (BE)
(74) Representative: Roth, Sebastian

(57) **Abstract**

The disclosure proposes an electro-optical modulator, and a corresponding method of fabricating the electro-optical modulator. The electro-optical modulator comprises: a cladding layer; a first and second waveguide core; a ferroelectric layer; and at least two electrodes configured to generate an electric-field across the ferroelectric layer for modulating an optical wave as it passes through the second waveguide core. The ferroelectric layer comprises a first end in the second section, and extends at least in the second section above the first waveguide core, in the third section above the first and the second waveguide core, and in the fourth section above the second waveguide core, wherein in the third section the second waveguide core extends above the first waveguide core, and wherein the second waveguide core is closer to the ferroelectric layer in the fourth section, than the first waveguide core is to the ferroelectric layer in the second section.

## Description

### TECHNICAL FIELD

The present disclosure relates to an electro-optical modulator. The disclosure proposes an electro-optical modulator, and a corresponding method of fabricating the electro-optical modulator. The electro-optical modulator comprises a ferroelectric layer and is arranged in a new kind of way.

### BACKGROUND

An electro-optical modulator is a device which converts an electrical signal, for example, a stream of 0V and 1V signals encoding digital information, into the optical domain, e.g., by turning light *on* or *off* depending on an input voltage. Electro-optical modulation is an essential element of the modern telecommunication systems, playing a critical role in the conversion and transmission of electrical signals into optical signals. The most widely employed mechanism for this process is the electro-optic effect, commonly known as the *Pockels* effect.

However, silicon, the standard material for integrated photonics, does not exhibit the Pockels effect due to its centrosymmetric structure. This necessitates the integration of other materials to enable electro-optic modulation. One such promising candidate is Barium Titanate (BTO), which has one of the highest Pockels coefficients, making it a promising choice for on-chip modulation.

Losses in electro-optical modulators can significantly impede their performance and, consequently, the overall efficacy of the communication systems they are a part of.

For example, losses in electro-optical modulators can result in the attenuation of the optical signal. Thus, the optical signal may not reach its intended destination with the required power levels, necessitating the use of additional amplifiers or repeaters, which in turn increases the complexity and cost of the system.

Furthermore, losses can lead to a degradation in the signal quality. Maintaining signal integrity is paramount, as the demand for high data rates is ever-increasing. Losses in the modulator can introduce noise and distortions, which can result in a higher bit error rate, making the transmitted data less reliable.

### SUMMARY

In view of the above, an objective of this disclosure is to reduce losses in an electro-optical modulator.

The disclosure is based on the following considerations.

The materials that enable electro-optic modulation, for example BTO, seem to lead to excessive losses for the electro-optical modulator.

In the following, the material BTO is used exemplary as the ferroelectric material. However, other materials that enable electro-optic modulation may be used instead.

To mitigate the excessive losses of BTO, two waveguide cores, for example, a silicon (Si) and a silicon nitride (SiN) waveguide core, can be employed for interconnection. BTO may be thoroughly etched away in these interconnects, leaving it present solely within the modulator structure. In an active device, for effective light modulation, the mode is required to couple with the BTO. This mode transition, however, incurs losses due to three primary factors:
1) non-optimal etching of BTO leading to high scattering loss,
2) discontinuity of the waveguide cross section causing mode overlap, and
3) an elevated level of BTO loss near the edge.

In particular, the elevated level of BTO loss near the edge is not conventionally known.

Generally, there is an elevated level of loss near the etched edges of BTO. The waveguides nearest to the etched edges of BTO are significantly more loss-prone than those distanced more than 50µm from the etched BTO edges.

Thus, an objective is to reduce losses near an edge of a ferroelectric layer in an electro-optical modulator.

These and other objectives are achieved by this disclosure as described in the enclosed independent claims. Advantageous implementations are further defined in the dependent claims.

A first aspect of this disclosure provides an integrated electro-optical modulator comprising: a cladding layer; a first waveguide core and a second waveguide core, which are embedded in the cladding layer; a ferroelectric layer, wherein the first waveguide core and the second waveguide core are separated from the ferroelectric layer by the cladding layer; and at least two electrodes; wherein the electro-optical modulator comprises a first section, a second section, a third section, and a fourth section, which are abutting and consecutively arranged one after the other, wherein the first waveguide core extends at least in the first section, the second section, and the third section, wherein the second waveguide core extends at least in the third section and the fourth section, wherein the ferroelectric layer comprises a first end in the second section, and extends at least in the second section above the first waveguide core, in the third section above the first and the second waveguide core, and in the fourth section above the second waveguide core, wherein in the third section the second waveguide core extends above the first waveguide core, wherein the second waveguide core is closer, for example, closer in a vertical direction, to the ferroelectric layer in the fourth section, than the first waveguide core is to the ferroelectric layer in the second section, wherein the first waveguide core is configured to receive the optical wave and to couple the optical wave to the second waveguide core in the third section, and wherein the at least two electrodes are configured to receive an electrical signal thereby generating an electric-field across at least a part of the ferroelectric layer, wherein the electric-field changes a refractive index of the ferroelectric layer thereby modulating the optical wave as it passes through the second waveguide core.

In this disclosure, the term "closer", for example, a first component is closer to a second component than a third component is to the second component, refers to a minimal distance between the first component and the second component being smaller than a minimal distance between the third component and the second component.

The ferroelectric layer may begin in the second section and/or end in the seventh section. The second waveguide core may begin in the third section and/or end in another section or in the sixth section.

For example, the ferroelectric layer extends at least in the second section, the third section, and the fourth section, wherein the start of the extension through said sections is in the second section.

The ferroelectric layer may be embedded in the cladding layer. The first waveguide core and the second waveguide core may be horizontally separated from each other by the cladding layer except of in the third section.

The second waveguide core may be sandwiched between the first waveguide core and the ferroelectric layer.

In an implementation form of the first aspect, wherein the optical wave is optically decoupled from the ferroelectric layer in the first waveguide core.

Thus, losses of the optical wave may be reduced, as, for example, the larger losses in the first waveguide core are reduced.

In a further implementation form of the first aspect, wherein the first waveguide core ends in the third section or extends in the fourth section without guiding the optical wave, and/or wherein the second waveguide core ends in the third section.

In a further implementation form of the first aspect, wherein the ferroelectric layer has a Pockels tensor containing at least one non-vanishing element rᵢⱼ where i≠j.

In a further implementation form of the first aspect, wherein the electro-optical modulator further comprises a linear adiabatic coupler in the third section, the linear adiabatic coupler being configured to couple the optical wave from the first waveguide core to the second waveguide core.

In a further implementation form of the first aspect, wherein the linear adiabatic coupler is formed by a tapered end of the first waveguide core and/or a tapered end of the second waveguide core.

In a further implementation form of the first aspect, wherein the extension direction of the second waveguide core in the fourth section is perpendicular to a vertical direction and/or a horizontal direction, wherein the ferroelectric layer is provided above the second waveguide core in the vertical direction, and wherein the electric-field generated by the at least two electrodes comprises a component in the vertical direction and/or a component in the horizontal direction.

In a further implementation form of the first aspect, wherein the first waveguide core is electrically connected to an electrode of the at least two electrodes.

In a further implementation form of the first aspect, wherein the second waveguide core is closer to the ferroelectric layer than the first waveguide core is to the ferroelectric layer.

Thus, a smallest distance, when considering the entire second waveguide core, from the second waveguide core to the ferroelectric layer, may be smaller than a smallest distance, when considering the entire first waveguide core, from the first waveguide core to the ferroelectric layer.

In a further implementation form of the first aspect, wherein at least one of: a distance between the ferroelectric layer and the second waveguide core is less than 150 nm, a distance between the ferroelectric layer and the first waveguide core is 300 nm to 1000 nm, and the ferroelectric layer has a thickness of 50 nm to 200 nm.

In a further implementation form of the first aspect, wherein at least one of: a distance between the ferroelectric layer and the second waveguide core is less than 300 nm, a distance between the ferroelectric layer and the first waveguide core is 50 nm to 2000 nm, and the ferroelectric layer has a thickness of 20 nm to 2000 nm.

In a further implementation form of the first aspect, wherein at least one of: the first waveguide core does not extend in the fourth section, the second waveguide core does not extend in the first section, and the ferroelectric layer does not extend in the first section.

In a further implementation form of the first aspect, the electro-optical modulator further comprises a third waveguide core, wherein the third waveguide core is embedded in the cladding layer and separated from the ferroelectric layer by the cladding layer; and wherein the electro-optical modulator further comprises a fifth section, a sixth section, a seventh section, and an eighth section, which are abutting and consecutively arranged one after the other, wherein the third waveguide core extends at least in the sixth section, the seventh section, and the eighth section, wherein the second waveguide core further extends at least in the fifth section and the sixth section, wherein the ferroelectric layer comprises a second end in the seventh section, and further extends at least in the seventh section above the third waveguide core, in the sixth section above the third and the second waveguide core, and in the fifth section above the second waveguide core, wherein in the sixth section the second waveguide core extends above the third waveguide core, wherein the second waveguide core is closer to the ferroelectric layer in the fifth section, than the third waveguide core is to the ferroelectric layer in the seventh section, and wherein the second waveguide core is configured to couple the optical wave to the third waveguide core in the sixth section.

In a further implementation form of the first aspect, the electro-optical modulator further comprises a fifth section, a sixth section, a seventh section, and an eighth section, which are abutting and consecutively arranged one after the other, wherein the first waveguide core further extends at least in the sixth section, the seventh section, and the eighth section, wherein the second waveguide core further extends at least in the fifth section and the sixth section, wherein the ferroelectric layer comprises a second end in the seventh section, and further extends at least in the seventh section above the first waveguide core, in the sixth section above the third and the second waveguide core, and in the fifth section above the second waveguide core, wherein in the sixth section the second waveguide core extends above the first waveguide core, wherein the second waveguide core is closer to the ferroelectric layer in the fifth section, than the first waveguide core is to the ferroelectric layer in the seventh section, and wherein the second waveguide core is configured to couple the optical wave to the first waveguide core in the sixth section.

In a further implementation form of the first aspect, wherein at least one of: the ferroelectric layer comprises barium titanate, the first waveguide core comprises silicon, the third waveguide core comprises silicon, the second waveguide core comprises silicon nitride, and the cladding layer comprises silicon dioxide.

The buffer layer may be a lattice buffer layer. The buffer layer may comprise at least one of Germanium (Ge), Tin-zinc-oxide (SZO), and strontium titanate (STO).

A second aspect of this disclosure provides a method of fabricating an integrated electro-optical modulator comprising: forming a cladding layer; forming a first waveguide core and a second waveguide core embedded in the cladding layer; forming a ferroelectric layer, wherein the first waveguide core and the second waveguide core are separated from the ferroelectric layer by the cladding layer; and forming at least two electrodes; wherein the electro-optical modulator comprises a first section, a second section, a third section, and a fourth section, which are abutting and consecutively arranged one after the other, wherein the first waveguide core is formed to extend at least in the first section, the second section, and the third section, wherein the second waveguide core is formed to extend at least in the third section and the fourth section, wherein the ferroelectric layer is formed to comprise a first end in the second section, and to extend at least in the second section above the first waveguide core, in the third section above the first and the second waveguide core, and in the fourth section above the second waveguide core, wherein in the third section the second waveguide core is formed above the first waveguide core, wherein the second waveguide core is formed to be closer to the ferroelectric layer in the fourth section, than the first waveguide core is to the ferroelectric layer in the second section, wherein the first waveguide core is configured to receive the optical wave and to couple the optical wave to the second waveguide core in the third section, and wherein the at least two electrodes are configured to receive an electrical signal thereby generating an electric-field across at least a part of the ferroelectric layer, wherein the electric-field changes a refractive index of the ferroelectric layer thereby modulating the optical wave as it passes through the second waveguide core.

In an implementation form of the second aspect, the method further comprises: providing a wafer, wherein the wafer comprises a substrate, the cladding layer provided above the substrate, and the first waveguide core embedded in the cladding layer; providing the second waveguide core above the substrate; providing the ferroelectric layer on the cladding layer; providing a second cladding layer above the ferroelectric layer; and providing the least two electrodes so that they at least partially surround the ferroelectric layer.

In a further implementation form of the second aspect, providing the ferroelectric layer comprises: bonding a ferroelectric wafer to the cladding layer, wherein the ferroelectric wafer comprises a ferroelectric layer and one or more other layers, and wherein the ferro-electric layer is bonded to the cladding layer; removing the one or more other layers; and etching the ferroelectric layer.

In a further implementation form of the second aspect, the one or more other layers comprise the buffer layer, wherein removing the buffer layer comprises grinding and/or Chemical Mechanical Planarization.

In a further implementation form of the second aspect, the method further comprises patterning and/or planarizing the etched ferroelectric layer.

The method of the second aspect may have implementation forms that correspond to the implementation forms of the device of the first aspect. The method of the second aspect and its implementation forms achieve the advantages and effects described above for the electro-optical modulator of the first aspect and its respective implementation forms.

Further, in this disclosure, a first component and a second component are considered to be different components, if not explicitly mentioned otherwise. For example, a first section and a second section are considered to be different sections.

Further, in this disclosure, *"approximately"* can mean *"within a certain range comprising the nominal value".* That range may be +- 10 %, +-5% or +-2 % of the nominal value.

Notably, in this disclosure, forming or providing a layer *"on"* another layer may mean growing/depositing these layers one upon the other. Thus, surfaces of these layers may be in contact. Forming a layer *"above"* another layer may mean that this layer is formed after the other layer, but there may be formed one or more layers in between.

Further, in this disclosure, the phrase *"above"* when referring to a physical location may refer to a vertical direction, wherein the extension direction of at least one of the first, second, and third waveguide core is perpendicular to the vertical direction and a horizontal direction.

### BRIEF DESCRIPTION OF DRAWINGS

The above described aspects and implementation forms will be explained in the following description of specific embodiments in relation to the enclosed drawings, in which
- FIG. 1: shows an electro-optical modulator according to this disclosure.
- FIG. 2: shows a cross-section of an electro-optical modulator according to this dis-closure.
- FIG. 3: shows a bottom view of a taper of an electro-optical modulator according to this disclosure.
- FIG. 4: shows an exemplary electro-optical modulator according to this disclosure.
- FIG. 5: shows an exemplary electro-optical modulator according to this disclosure, wherein the first waveguide core is electrically connected to an electrode of the at least two electrodes.
- FIG. 6: shows additional sections of an electro-optical modulator according to this disclosure.
- FIG. 7: shows steps for fabricating an electric-optic modulator according to this dis-closure.
- FIG. 8: shows steps for fabricating an electric-optic modulator according to this dis-closure.
- FIG. 9: shows an exemplary electro-optical modulator according to this disclosure.
- FIG. 10: shows a method according to this disclosure.

### DETAILED DESCRIPTION OF EMBODIMENTS

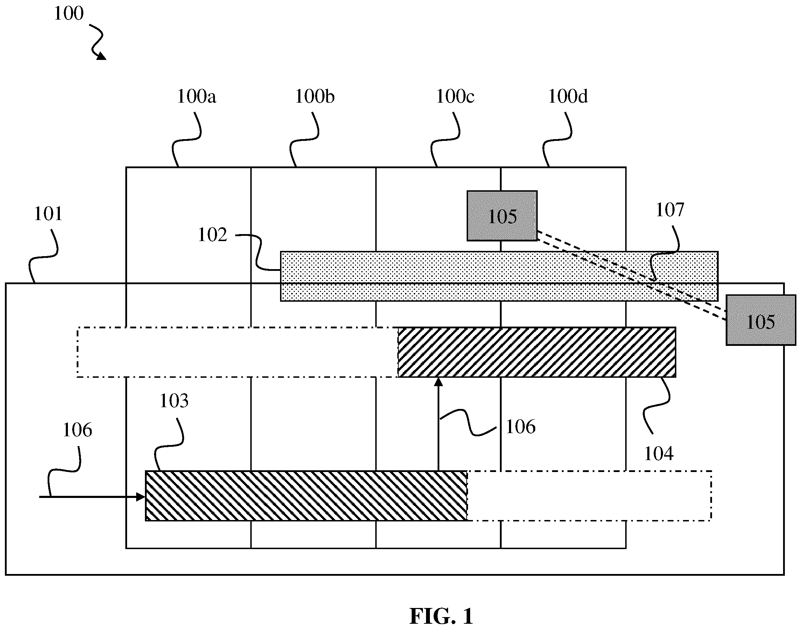

FIG. 1 shows an electro-optical modulator 100 according to this disclosure. The electro-optical modulator 100 is an integrated electro-optical modulator 100 and comprises: a cladding layer 101; a first waveguide core 103 and a second waveguide core 104, which are embedded in the cladding layer 101; a ferroelectric layer 102, wherein the first waveguide core 103 and the second waveguide core 104 are separated from the ferroelectric layer 102 by the cladding layer 101; and at least two electrodes 105.

The ferroelectric layer 102 and/or the at least two electrodes 105 may or may not be embedded in the cladding layer 101, which is indicated in FIG. 1 by the overlapping boxes of the cladding layer with the boxes of the ferroelectric layer 102 and the at least two electrodes 105.

The electro-optical modulator 100 comprises a first section 100a, a second section 100b, a third section 100c, and a fourth section 100d, which are abutting and consecutively arranged one after the other.

The first waveguide core 103 extends at least in the first section 100a, the second section 100b, and the third section 100c. The second waveguide core 104 extends at least in the third section 100c and the fourth section 100d. The ferroelectric layer 102 comprises a first end in the second section 100b, and extends at least in the second section 100b above the first waveguide core 103, in the third section 100c above the first and the second waveguide core 104, and in the fourth section 100d above the second waveguide core 104, wherein in the third section 100c the second waveguide core 104 extends above the first waveguide core 103.

The first waveguide core 103 may further extend or may not further extend in the fourth section 100d or other sections of the electro-optical modulator 100, which is indicated in FIG. 1 by the box with dot-dashed edges extending from the first waveguide core 103.

The second waveguide core 104 may further extend or may not further extend in at least one of: the first section 100a, the second section 100b, and other sections of the electro-optical modulator 100, which is indicated in FIG. 1 by the box with dot-dashed edges extending from the second waveguide core 104.

The second waveguide core 104 is closer to the ferroelectric layer 102 in the fourth section 100d, than the first waveguide core 103 is to the ferroelectric layer 102 in the second section 100b

The first waveguide core 103 is configured to receive the optical wave 106 and to couple the optical wave 106 to the second waveguide core 104 in the third section 100c, and the at least two electrodes 105 are configured to receive an electrical signal thereby generating an electric-field 107 across at least a part of the ferroelectric layer 102, wherein the electric-field 107 changes a refractive index of the ferroelectric layer 102 thereby modulating the optical wave 106 as it passes through the second waveguide core 104 .

This disclosure may be based on the integration of materials with different ferro-electric domains, for example, an electro-optic material like Barium Titanite (BTO), into an integrated photonic platform. The Pockels effect of these ferroelectric materials can be used to modify the index of refraction of the material which can be modulated by an electric field.

Some ferroelectric materials, for example, BTO, are known to have a high electro-optic (Pockels) effect which makes it suitable for electro-optical modulation. The strength of Pockels effect is however dependent on the crystalline orientation of the ferroelectric medium as well as light polarization with regards to the direction of the applied electric field.

Transparent ferroelectric materials have different crystal orientations which can slightly vary from wafer to wafer or position to position on the same wafer. Therefore, it is generally difficult to assess the optimum direction of the applied field to harness the maximum Pockels effect.

Multiple electrode configurations may be used to orient the electrical field in all spatial directions. This allows to modulate both a Transverse Electric (TE) mode and a Transverse Magnetic (TM) mode, and to potentially deal with semi-random directionality of crystals, as it may be easy to change the electrical field direction.

Additionally, in order to maximize the electric field and, consequently, the modulation, the voltage may be brought as close as possible to the waveguide, i.e., metal lines may be brought extremely close to the optical mode. However, this can result in a dramatic increase in optical loss when metals are brought too close to the waveguide.

Silicon as a material may be used to enhance the strength of the effect, by pulling a large part of the optical mode into the bulk of the thin film ferroelectric material.

On top of this, the patterning of the ferroelectric material can introduce excess optical losses (due to damage and roughness on the sidewall) which can make the device barely usable when a waveguide is placed in close proximity to an etched facet of a ferroelectric material.

Thus, a transition from two stacked waveguide cores, for example, a Si waveguide core and SiN waveguide core, may be used so that at extremities of the ferroelectric material the optical mode is sufficient far away to avoid optical losses.

In order to fix the issues created by the patterning and the unclear state of the ferro-electric orientation, the waveguide cores and the electrodes may be positioned in a specific arrangement. Optical Losses can be reduced by using a dual waveguide system which allows to confine the mode of the light sufficiently far from the damaged sidewall of the ferroelectric material. The electro-optical modulator 100 may be used for a modulator, a phase shifter, and a polarization rotator.

An alternative for BTO as a ferroelectric material may be, for example, at least one of: Lithium niobate (LiNbO3), Strontium titanate (STO or SrTiO₃), Hafnium zirconium oxide (HZO), and Lead zirconate titanate (PZT).

Avoiding extra losses at the waveguide core, for example, SiN, to BTO transition may be achieved by increasing the confinement of the light inside the waveguide core and away from BTO before and inside the transition, and then smoothly coupling the light inside BTO using, e.g., and an adiabatic coupler. Achieving this goal by using solely one waveguide core, for example, a SiN layer may be difficult, as the silicon nitride layer is optimized to provide a large overlap with BTO inside the device and is therefore not a high confinement waveguide. The width of SiN at the transition may be increased, or a partial etch of SiN may be introduced. However, this method may not effectively reduce the overlap between the mode and BTO at the transition. This is due to the low vertical confinement of the mode inside the thin SiN layer.

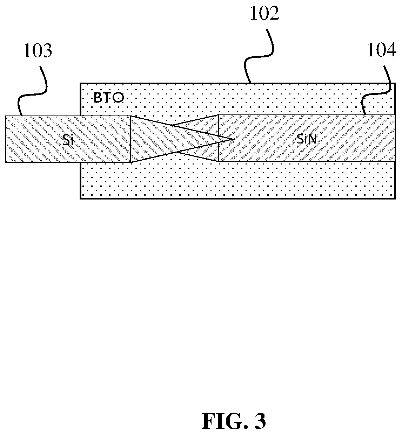

This disclosure addresses this transition issue by incorporating a first waveguide core 103, for example, a silicon layer, below the second waveguide core 104, for example, SiN layer. During the transition, the light can remain confined within the first waveguide core 103. After the transition, light can then be coupled to the second waveguide core 104, for example, via a short linear adiabatic coupler, as shown in FIG. 3. A specifically designed taper, for example, a taper of approximately 20 µm in length, can achieve less than 0.05 dB loss per transition.

To establish the silicon, a Silicon On-Insulator (SOI) wafer may be used instead of a silicon wafer. Since the silicon layer may be patterned before bonding, if it is sufficiently thinned and doped, it can also function as a bottom electrode in a semi-vertical configuration.

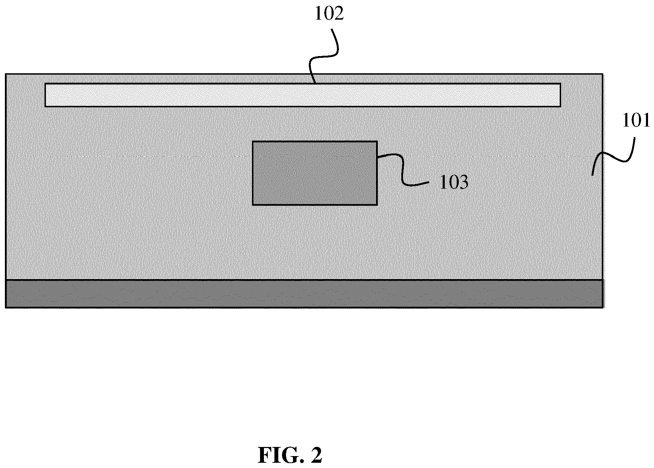

FIG. 2 shows a cross-section of an electro-optical modulator 100 according to this disclosure.

In FIG. 2 the first waveguide core 103 is shown, wherein the second waveguide core 104 is not shown, as in this example, the second waveguide core 104 begins further along the extension of the first waveguide core 103. The distance between the first waveguide core 103 and the ferroelectric layer 102 may, for example, be 600 nm in a cross-section that does not include the second waveguide core 104.

FIG. 3 shows a bottom view of a taper of an electro-optical modulator 100 according to this disclosure.

For example, at a transition, light can be fully confined inside the first waveguide core 103, for example, Si, and then guided inside the second waveguide core 104, for example, SiN/BTO using an adiabatic taper. The transition region in FIG. 3 is below the ferroelectric layer 102 at a certain distance from the edge of the ferroelectric layer 102.

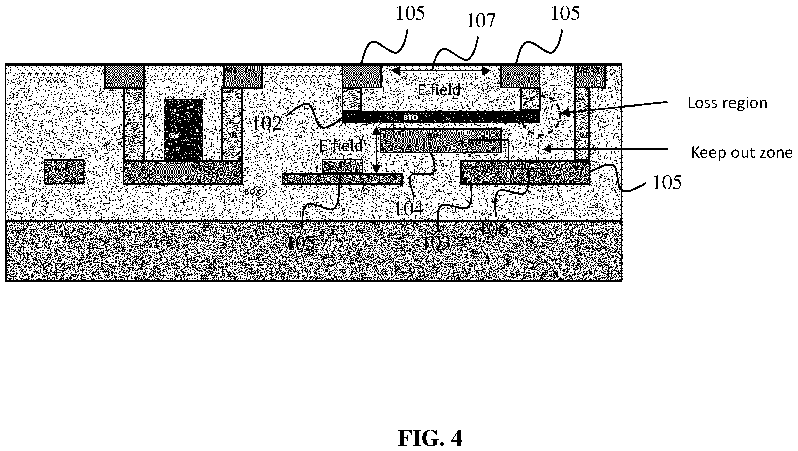

FIG. 4 shows an exemplary electro-optical modulator 100 according to this disclosure.

The exemplary electro-optical modulator 100 comprises a plurality of electrodes 105.

The plurality of electrodes 105 may be configured to apply an electric field 107 across the ferroelectric layer 102 in one or more directions, for example, all three dimensions, based on the electrode configurations. In this example, two exemplary electric fields 107 are shown, one in a vertical direction and one in a horizontal direction.

FIG. 4 shows keep out zone below an edge of the ferroelectric layer 102. This keep out zone comprises a bigger gap between the ferroelectric layer 102 and both of the waveguide cores 103, 104. Thus, an optical loss in a loss region can be reduced. The term *"loss region"* may refer to a lateral area around the edge of the ferroelectric layer 102. For example, the loss region may have a lateral length of > 80 µm.

FIG. 4 shows a transition of an optical wave 106 from the first waveguide core 103 to the second waveguide core 104 and exemplary dimensions and materials of the electro-optical modulator 100.

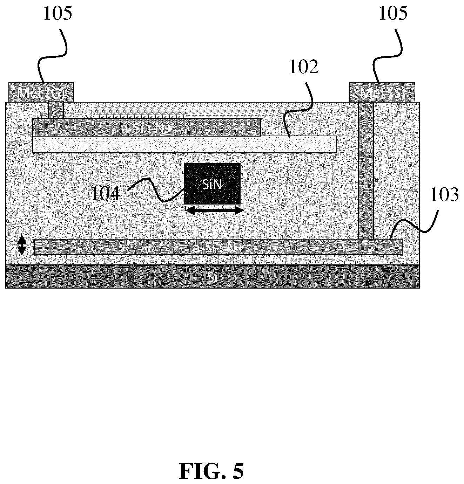

The electro-optical modulator 100 according to this disclosure may include other configurations as exemplary shown in FIG. 5.

FIG. 5 shows an exemplary electro-optical modulator 100 according to this disclosure, wherein the first waveguide core 103 is electrically connected to an electrode of the at least two electrodes 105.

If the first waveguide core 103, for example, the Si layer, below the second waveguide core 104, for example, the SiN layer, can be thinned down and doped, it can function as a bottom electrode, enabling the application of the E-field vertically as shown in FIG. 5. Altering the direction of the electric field is particularly advantageous in order to maximize the modulation of both light polarizations. Moreover, BTO, along with similar ferroelectric materials, is composed of numerous electric domains with varying directions. Although the orientation of these domains is vital for maximizing electro-optical modulation, they are challenging to ascertain prior to measurement.

The ability to apply the electric field in any desired dimension may be a beneficial feature. This versatility can also facilitate the realization of devices beyond modulators, such as polarization rotators. Apart from the vertical direction, the versatility of the platform allows for application of the electric field in any desired dimension.

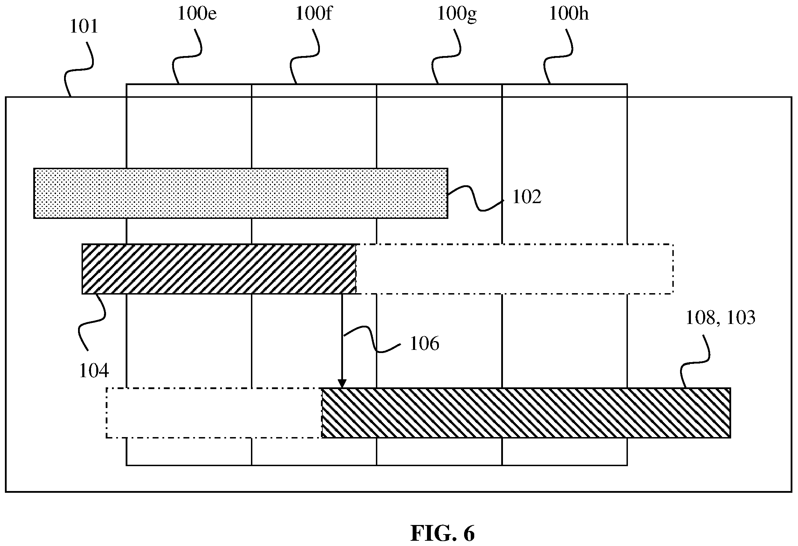

FIG. 6 shows additional sections of an electro-optical modulator 100 according to this disclosure. FIG. 6 shows that the electro-optical modulator may further comprise a fifth section 100e, a sixth section 100f, a seventh section 100g, and an eighth section 100h, which are abutting and consecutively arranged one after the other.

For example, the sections of the electro-optical modulator 100 shown in FIG. 1 may form a first end of the electro-optical modulator 100. The additional sections of the electro-optical modulator 100 shown in FIG. 6 may form a second end of the electro-optical modulator 100. The additional sections may be mirrored compared to the sections of the electro-optical modulator 100 shown in FIG. 1. For example, the ferroelectric layer 102 may comprise a first end in the second section 100b and a second end in the seventh section 100g. The second waveguide core 104 may or may not end in the sixth section 100f. The third waveguide core 104 may or may not start in the sixth section 100f.

The sections of the electro-optical modulator 100 shown in FIG. 1 may be for coupling the optical wave 106 from the first waveguide core 103 into the second waveguide core 104 and the additional sections may be for coupling the optical wave 106 from the second waveguide core 104 into the third waveguide core 108.

The first waveguide core 103 and the third waveguide core 108 may be considered to form a combined waveguide core and/or may be directly optically connected and abutting to each other. The first waveguide core 103 and the third waveguide core 108 may be the same waveguide core 103, 108 or different waveguide cores.

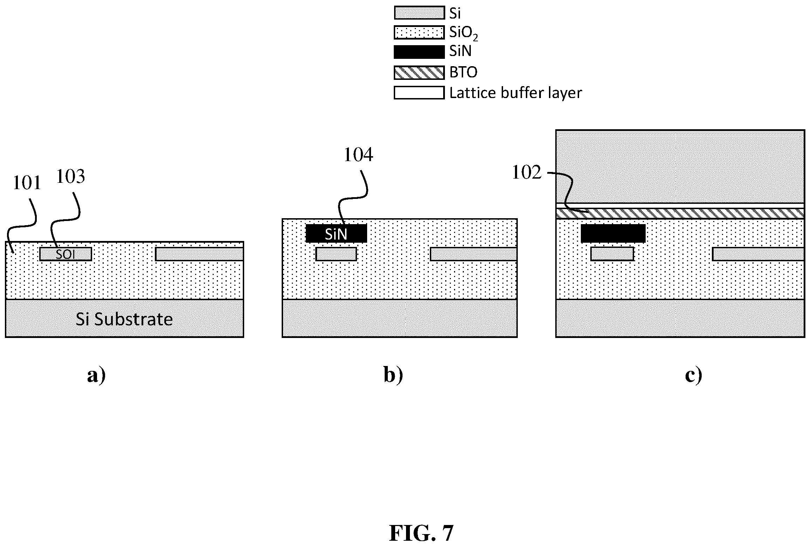

FIGs. 7 to 9 show a process flow of fabricating an exemplary electric-optic modulator according to this disclosure.

Further, FIGs. 7 to 9 show exemplary materials that may be used for the electric-optic modulator. Alternatively, other materials may be used.

FIG. 7 shows steps for fabricating an electric-optic modulator 100 according to this disclosure.

FIG. 7a shows providing a SOI wafer, performing Si patterning (+deep etch), performing oxide deposition, and performing planarization. In this example the SOI wafer comprises at least a part of the cladding 101 and a SOI based first waveguide core 103.

FIG. 7b shows adding a silicon nitride layer on top of a Si waveguide core level.

The SiN may form the second waveguide core 104.

FIG. 7c shows BTO layer transfer.

For example, to generate a ferroelectric wafer, a BTO layer may be grown on a thin buffer layer, for example, a lattice buffer layer, which may be provided on a silicon substrate. The BTO layer may form the ferroelectric layer 102.

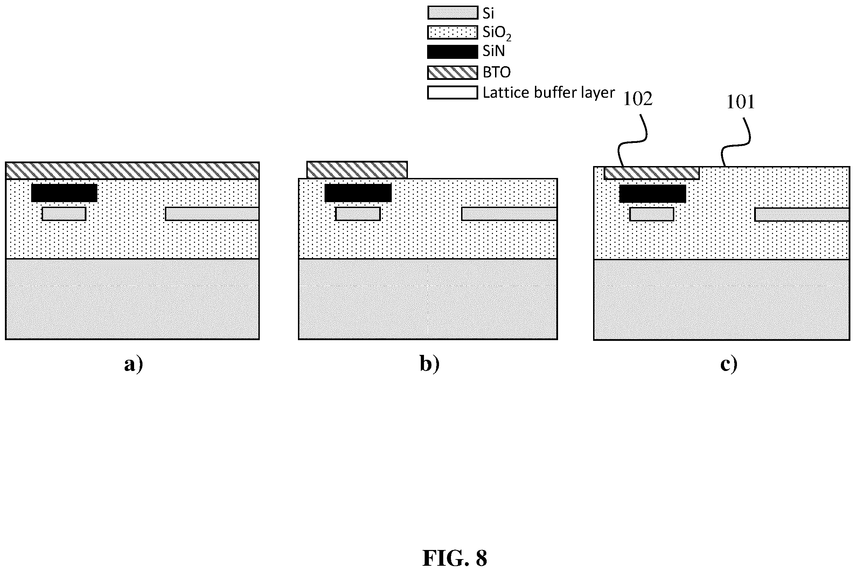

FIG. 8 shows steps for fabricating an electric-optic modulator 100 according to this disclosure.

FIG. 8a shows removal of at least a part of the ferroelectric wafer.

The removal may comprise at least one of: lattice buffer layer removal, grinding, chemical mechanical planarization (CMP), and annealing.

FIG. 8b shows patterning of the BTO based ferroelectric layer 102, for example, by etching.

FIG. 8c shows oxide deposition for forming the cladding 101 and BTO planarization.

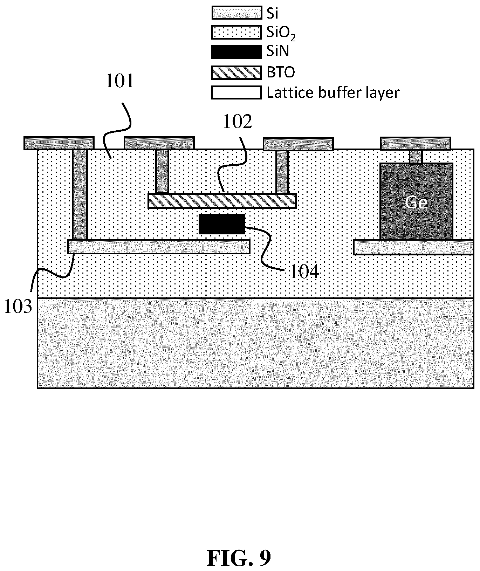

FIG. 9 shows an exemplary electro-optical modulator 100 according to this disclosure.

By performing additional manufacturing steps, for example, performing Ge window etching, Ge epitaxial growth, CMP, and doping, and by performing via definition, metal deposition, and interconnect formation, the device shown in FIG. 8 may be further processed to obtain the electro-optical modulator 100 shown in FIG. 9.

The process flow may form a general process flow of realizing a photonic platform including, for example, Si/SiN/BTO.

The manufacturing method of the electro-optical modulator 100 according to this disclosure may be directly compatible with standard integrated photonics used in integrated photonics.

The electro-optic modulator 100 may comprise a processor.

Generally, the processor may be configured to perform, conduct or initiate the various operations of the electro-optic modulator 100 described herein. The processor may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The electro-optic modulator 100 may further comprise memory circuitry, which stores one or more instruction(s) that can be executed by the processor, in particular under control of the software. For instance, the memory circuitry may comprise a non-transitory storage medium storing executable software code which, when executed by the processor, causes the various operations of the electro-optic modulator 100 to be performed. In one embodiment, the electro-optic modulator 100 may comprises one or more processors and a non-transitory memory connected to the one or more processors. The non-transitory memory may carry executable program code which, when executed by the one or more processors, causes the electro-optic modulator 100 to perform, conduct or initiate the operations or methods described herein.

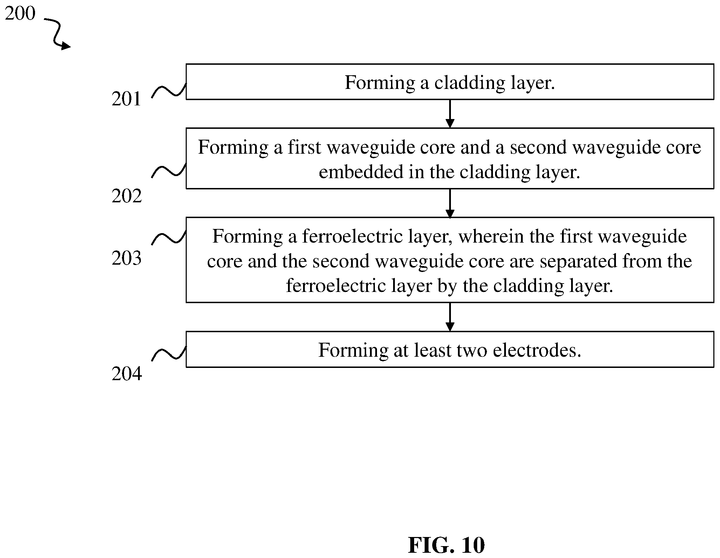

FIG. 10 shows a method 200 according to this disclosure. The method 200 is a method of fabricating an integrated electro-optical modulator 100, for example, the electro-optical modulator 100 shown in FIG. 1. The method 200 comprises a step 201 of forming a cladding layer 101. Further, the method 200 comprises a step 202 of forming a first waveguide core 103 and a second waveguide core 104 embedded in the cladding layer 101. Further, the method 200 comprises a step 203 of forming a ferroelectric layer 102, wherein the first waveguide core 103 and the second waveguide core 104 are separated from the ferroelectric layer 102 by the cladding layer 101. Further, the method 200 comprises a step 204 of forming at least two electrodes 105.

Generally, the electro-optical modulator 100 comprises a first section 100a, a second section 100b, a third section 100c, and a fourth section 100d, which are abutting and consecutively arranged one after the other. The first waveguide core 103 is formed to extend at least in the first section 100a, the second section 100b, and the third section 100c, wherein the second waveguide core 104 is formed to extend at least in the third section 100c and the fourth section 100d. The ferroelectric layer 102 is formed to comprise a first end in the second section 100b, and to extend at least in the second section 100b above the first waveguide core 103, in the third section 100c above the first and the second waveguide core 104, and in the fourth section 100d above the second waveguide core 104, wherein in the third section 100c the second waveguide core 104 is formed above the first waveguide core 103. The second waveguide core 104 is formed to be closer to the ferroelectric layer 102 in the fourth section 100d, than the first waveguide core 103 is to the ferroelectric layer 102 in the second section 100b.

Generally, the first waveguide core 103 is configured to receive the optical wave 106 and to couple the optical wave 106 to the second waveguide core 104 in the third section 100c, and wherein the at least two electrodes 105 are configured to receive an electrical signal thereby generating an electric-field 107 across at least a part of the ferroelectric layer 102, wherein the electric-field 107 changes a refractive index of the ferroelectric layer 102 thereby modulating the optical wave 106 as it passes through the second waveguide core 104.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. An integrated electro-optical modulator (100) comprising:
a cladding layer (101);
a first waveguide core (103) and a second waveguide core (104), which are embedded in the cladding layer (101);
a ferroelectric layer (102), wherein the first waveguide core (103) and the second waveguide core (104) are separated from the ferroelectric layer (102) by the cladding layer (101); and
at least two electrodes (105);
wherein the electro-optical modulator (100) comprises a first section (100a), a second section (100b), a third section (100c), and a fourth section (100d), which are abutting and consecutively arranged one after the other,
wherein the first waveguide core (103) extends at least in the first section (100a), the second section (100b), and the third section (100c),
wherein the second waveguide core (104) extends at least in the third section (100c) and the fourth section (100d),
wherein the ferroelectric layer (102) comprises a first end in the second section (100b), and extends at least in the second section (100b) above the first waveguide core (103), in the third section (100c) above the first and the second waveguide core (104), and in the fourth section (100d) above the second waveguide core (104),
wherein in the third section (100c) the second waveguide core (104) extends above the first waveguide core (103),
wherein the second waveguide core (104) is closer to the ferroelectric layer (102) in the fourth section (100d), than the first waveguide core (103) is to the ferroelectric layer (102) in the second section (100b),
wherein the first waveguide core (103) is configured to receive the optical wave (106) and to couple the optical wave (106) to the second waveguide core (104) in the third section (100c), and
wherein the at least two electrodes (105) are configured to receive an electrical signal thereby generating an electric-field (107) across at least a part of the ferroelectric layer (102), wherein the electric-field (107) changes a refractive index of the ferroelectric layer (102) thereby modulating the optical wave (106) as it passes through the second waveguide core (104).

2. The electro-optical modulator (100) according to any one of the preceding claims,
wherein the optical wave (106) is optically decoupled from the ferroelectric layer (102) in the first waveguide core (103).

3. The electro-optical modulator (100) according to any one of the preceding claims,
wherein the first waveguide core (103) ends in the third section (100c) or extends in the fourth section (100d) without guiding the optical wave (106), and/or
wherein the second waveguide core (104) ends in the third section (100c).

4. The electro-optical modulator (100) according to any one of the preceding claims,
wherein the ferroelectric layer (102) has a Pockels tensor containing at least one non-vanishing element rᵢⱼ where i≠j.

5. The electro-optical modulator (100) according to any one of the preceding claims,
wherein the electro-optical modulator (100) further comprises a linear adiabatic coupler in the third section (100c), the linear adiabatic coupler being configured to couple the optical wave (106) from the first waveguide core (103) to the second waveguide core (104).

6. The electro-optical modulator (100) according to claim 5,
wherein the linear adiabatic coupler is formed by a tapered end of the first waveguide core (103) and/or a tapered end of the second waveguide core (104).

7. The electro-optical modulator (100) according to any one of the preceding claims,
wherein the extension direction of the second waveguide core (104) in the fourth section (100d) is perpendicular to a vertical direction and/or a horizontal direction,
wherein the ferroelectric layer (102) is provided above the second waveguide core (104) in the vertical direction, and
wherein the electric-field (107) generated by the at least two electrodes (105) comprises a component in the vertical direction and/or a component in the horizontal direction.

8. The electro-optical modulator (100) according to any one of the preceding claims, wherein the first waveguide core (103) is electrically connected to an electrode of the at least two electrodes (105).

9. The electro-optical modulator (100) according to any one of the preceding claims,
wherein the second waveguide core (104) is closer to the ferroelectric layer (102) than the first waveguide core (103) is to the ferroelectric layer (102).

10. The electro-optical modulator (100) according to any one of the preceding claims,
wherein at least one of:
a distance between the ferroelectric layer (102) and the second waveguide core (104) is less than 150 nm,
a distance between the ferroelectric layer (102) and the first waveguide core (103) is 300 nm to 1000 nm, and
the ferroelectric layer (102) has a thickness of 50 nm to 200 nm.

11. The electro-optical modulator (100) according to any one of the preceding claims,
wherein at least one of:
the first waveguide core (103) does not extend in the fourth section (100d),
the second waveguide core (104) does not extend in the first section (100a), and
the ferroelectric layer (102) does not extend in the first section (100a).

12. The electro-optical modulator (100) according to any one of the preceding claims, further comprising a third waveguide core (108), wherein the third waveguide core (108) is embedded in the cladding layer (101) and separated from the ferroelectric layer (102) by the cladding layer (101); and
wherein the electro-optical modulator (100) further comprises a fifth section (100e), a sixth section (100f), a seventh section (100g), and an eighth section (100h), which are abutting and consecutively arranged one after the other,
wherein the third waveguide core (108) extends at least in the sixth section (100f), the seventh section (100g), and the eighth section (100h),
wherein the second waveguide core (104) further extends at least in the fifth section (100e) and the sixth section (100f),
wherein the ferroelectric layer (102) comprises a second end in the seventh section (100g), and further extends at least in the seventh section (100g) above the third waveguide core (108), in the sixth section (100f) above the third and the second waveguide core (104), and in the fifth section (100e) above the second waveguide core (104),
wherein in the sixth section (100f) the second waveguide core (104) extends above the third waveguide core (108),
wherein the second waveguide core (104) is closer to the ferroelectric layer (102) in the fifth section (100e), than the third waveguide core (108) is to the ferroelectric layer (102) in the seventh section (100g), and
wherein the second waveguide core (104) is configured to couple the optical wave (106) to the third waveguide core (108) in the sixth section (100f).

13. A method of fabricating an integrated electro-optical modulator (100) comprising:
forming a cladding layer (101);
forming a first waveguide core (103) and a second waveguide core (104) embedded in the cladding layer (101);
forming a ferroelectric layer (102), wherein the first waveguide core (103) and the second waveguide core (104) are separated from the ferroelectric layer (102) by the cladding layer (101); and
forming at least two electrodes (105);
wherein the electro-optical modulator (100) comprises a first section (100a), a second section (100b), a third section (100c), and a fourth section (100d), which are abutting and consecutively arranged one after the other,
wherein the first waveguide core (103) is formed to extend at least in the first section (100a), the second section (100b), and the third section (100c),
wherein the second waveguide core (104) is formed to extend at least in the third section (100c) and the fourth section (100d),
wherein the ferroelectric layer (102) is formed to comprise a first end in the second section (100b), and to extend at least in the second section (100b) above the first waveguide core (103), in the third section (100c) above the first and the second waveguide core (104), and in the fourth section (100d) above the second waveguide core (104),
wherein in the third section (100c) the second waveguide core (104) is formed above the first waveguide core (103),
wherein the second waveguide core (104) is formed to be closer to the ferroelectric layer (102) in the fourth section (100d), than the first waveguide core (103) is to the ferroelectric layer (102) in the second section (100b),
wherein the first waveguide core (103) is configured to receive the optical wave (106) and to couple the optical wave (106) to the second waveguide core (104) in the third section (100c), and
wherein the at least two electrodes (105) are configured to receive an electrical signal thereby generating an electric-field (107) across at least a part of the ferroelectric layer (102), wherein the electric-field (107) changes a refractive index of the ferroelectric layer (102) thereby modulating the optical wave (106) as it passes through the second waveguide core (104).

14. The method according to claim 13 comprising:
providing a wafer,
wherein the wafer comprises a substrate, the cladding layer (101) provided above the substrate, and the first waveguide core (103) embedded in the cladding layer (101);
providing the second waveguide core (104) above the substrate;
providing the ferroelectric layer (102) on the cladding layer (101);
providing a second cladding layer (101) above the ferroelectric layer (102); and
providing the least two electrodes so that they at least partially surround the ferro-electric layer (102).

15. The method according to claim 14, wherein providing the ferroelectric layer (102) comprises:
bonding a ferroelectric wafer to the cladding layer (101), wherein the ferroelectric wafer comprises a ferroelectric layer (102) and one or more other layers, and wherein the ferroelectric layer (102) is bonded to the cladding layer (101);
removing the one or more other layers; and
etching the ferroelectric layer (102).
